# FASCICULE DE BREVET EUROPEEN

(11) **EP 1 103 445 B1**
(45) Date de publication et mention de la délivrance du brevet: **10.11.2004**
(21) Numéro de dépôt: 00420243.8
(22) Date de dépôt: 22.11.2000
(51) Int. Cl.: B62D 5/06, B62D 6/02, B62D 5/083

(54) **Direction assistée hydraulique de véhicule automobile**
Hydraulische Kraftfahrzeugservolenkung
Hydraulic power steering for automotive vehicle

(30) Priorité: 26.11.1999 FR 9914947
(43) Date de publication de la demande: 30.05.2001
(73) Titulaire: Société de Mécanique d'Irigny, 69540 Irigny (FR)
(72) Inventeur: Legrand, Jean-Claude, 69540 Irigny (FR)
(74) Mandataire: Bratel, Gérard

(56) Documents cités:
- EP-A- 0 665 157
- EP-A- 0 739 807
- EP-A- 0 913 317
- US-A- 5 505 275

## Description

La présente invention concerne les systèmes de direction assistée hydraulique de véhicule automobile, et plus particulièrement les systèmes de direction à assistance variable en fonction de la vitesse du véhicule.

Encore plus particulièrement, l'invention concerne un système de direction assistée hydraulique dans laquelle l'assistance variable est faite à l'intérieur de la valve d'assistance, par l'intermédiaire d'un tiroir commandé par un moteur ou par un solénoïde. Différentes techniques sont actuellement utilisées à cet effet, qui peuvent être une variation de la raideur de la barre de tension de la valve d'assistance, provoquée par des plongeurs hydrauliques, ou un débit de fuite hydraulique sur la haute pression, qui est aussi contrôlé par les chanfreins de la valve en fonction du couple au volant et en fonction de la vitesse du véhicule.

Dans les réalisations habituelles, telles que rappelées ci-dessus, les systèmes de direction à assistance variable, qui par leur fonctionnement permettent une grande variation de l'assistance en fonction de la vitesse, sont alimentés en fluide hydraulique par une pompe attelée au moteur thermique du véhicule. La pompe est ainsi entraînée de façon permanente, et avec une puissance qui n'est pas nécessairement utile, notamment lorsque l'assistance de la direction n'est pas sollicitée. Ainsi, la solution actuelle est consommatrice d'une énergie relativement importante, prélevée sur la puissance motrice du véhicule, énergie qui n'est pas proportionnée aux besoins instantanés de la direction assistée.

Par le document EP-A-0665157, qui sert de base au préambule de la revendication 1, on connaît déjà une direction assistée hydraulique avec assistance variable en fonction de la vitesse du véhicule, l'assistance variable étant faite à l'intérieur de la valve d'assistance, direction dans laquelle l'alimentation en fluide hydraulique est assurée par un groupe moto-électrique, composé d'une pompe hydraulique et d'un moteur électrique accouplé à la pompe. Le fonctionnement du moteur électrique d'entraînement de la pompe est contrôlé par une unité électronique, qui provoque une mise à l'arrêt de la pompe seulement lorsque la pression dans un accumulateur hydraulique est supérieure à un certain seuil.

La présente invention vise à éviter ces inconvénients, en fournissant un système de direction assistée hydraulique perfectionné, permettant une économie d'énergie importante tout en procurant une grande variation de l'assistance.

A cet effet, l'invention a pour objet un système de direction assistée hydraulique de véhicule automobile, à assistance variable en fonction de la vitesse du véhicule, l'assistance variable étant faite à l'intérieur de la valve d'assistance, dans laquelle l'alimentation en fluide hydraulique est assurée par une pompe électro-hydraulique qui comprend une pompe hydraulique proprement dite, raccordée à la valve d'assistance, et un moteur électrique accouplé à la pompe, le moteur électrique possédant une commande pilotée par un calculateur en fonction d'informations incluant l'angle instantané du volant, cette commande pilotée permettant la mise au ralenti ou à l'arrêt de la pompe, dans les cas où l'assistance n'est pas sollicitée, ou ne l'est que faiblement.

Outre l'économie d'énergie ainsi réalisée, il est à noter que le pilotage du moteur électrique de la pompe électro-hydraulique et le pilotage du système de variation d'assistance sur la direction peuvent être combinés au sein d'un même calculateur, ce qui permet de réduire aussi les coûts de fabrication et de montage, dans le cas de la solution selon l'invention.

Cette solution possède encore de nombreux autres avantages, notamment pour des cas d'application spécifiques :
- La variation d'assistance est plus fine que dans les directions assistées existantes à assistance variable.
- La solution, objet de l'invention, permet de résoudre tous les cas de configuration où le positionnement d'une pompe sur le moteur thermique du véhicule, et attelée à celui-ci, est impossible pour des questions d'encombrement.
- Cette solution convient aussi dans le cas des moteurs dits "hybrides", où le système de pompe attelée au moteur ne peut être utilisé.
- La solution proposée par l'invention peut aussi s'appliquer dans tous les cas de nouveaux concepts de moteurs de véhicules, où le moteur ne permet pas d'entraîner la pompe d'assistance de direction dans toutes les situations de roulage, ceci étant principalement le cas de moteurs s'arrêtant lors de l'arrêt du véhicule (véhicules à motorisation électrique ou du type "stop and go"), ou des moteurs ne supportant pas d'entraîner une pompe, tels que les moteurs à turbine.

De toute façon, l'invention sera mieux comprise à l'aide de la description qui suit, en référence au dessin schématique annexé représentant, à titre d'exemple, une forme d'exécution de cette direction assistée hydraulique de véhicule automobile :
Figure 1 est une vue de face d'une direction assistée hydraulique conforme à la présente invention ;
Figure 2 est une vue en plan par dessus de cette direction assistée, correspondant à la figure 1.

Les figures représentent, extérieurement, une direction assistée hydraulique de véhicule automobile, qui comprend un carter central tubulaire 1, des soufflets 2 et des boîtiers côté roue 3, ainsi qu'une valve d'assistance 4 placée au raccordement de la colonne de direction, symbolisée par l'axe 5. De façon connue, la valve d'assistance 4 est reliée, par des conduits hydrauliques 6 et 7, à ces chambres de vérin formées dans le carter 1. Il s'agit d'une direction à assistance variable, faite à l'intérieur de la valve d'assistance 4 par l'intermédiaire d'un tiroir commandé par un moteur ou par un solénoïde (non représenté).

Le système de direction assistée comprend encore une pompe électro-hydraulique 8, autrement dit un groupe moto-pompe composé d'une pompe hydraulique 9 proprement dite, et d'un moteur électrique 10 accouplé à la pompe 9, et assurant l'entraînement en rotation de celle-ci. La pompe électro-hydraulique 8 étant située à distance des organes précédemment décrits, cette pompe 8 est raccordée par deux conduits hydrauliques 11 et 12, de longueur et de configuration convenables, à la valve d'assistance 4.

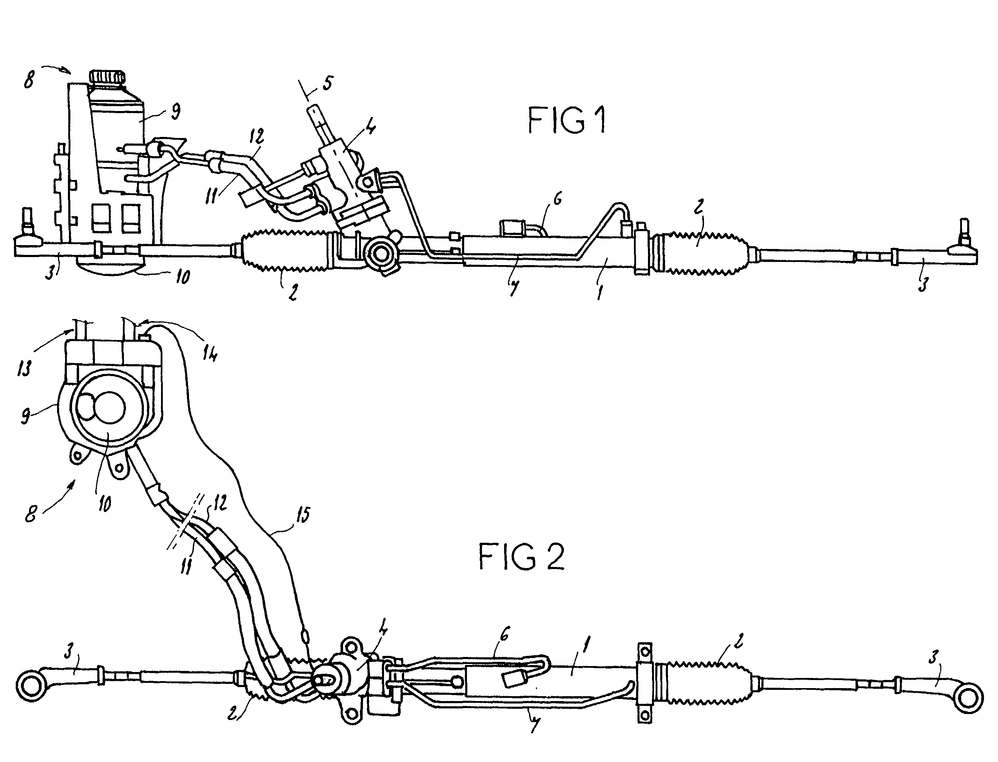

Comme montré sur la figure 2, la pompe électro-hydraulique 8, plus particulièrement son moteur électrique 10, comporte une alimentation électrique de puissance 13, à partir de la batterie du véhicule, et des entrées de signaux de commande 14, en provenance d'un calculateur (non représenté) embarqué sur le véhicule, qui pilote ledit moteur 10. Le calculateur peut également être intégré directement sur le moteur 10, par souci de réduction de l'encombrement ou pour réduire le nombre de fils électriques de liaison. Partant de la pompe électro-hydraulique 8, il est encore prévu une liaison électrique 15 aboutissant à la valve d'assistance 4, et assurant ici la commande de l'assistance variable. Cette commande peut être complétée par une information sur l'angle instantané du volant, afin de parfaire les informations qui pilotent la pompe électro-hydraulique 8 et éventuellement la valve d'assistance 4.

## Revendications

1. Système de direction assistée hydraulique de véhicule automobile, à assistance variable en fonction de la vitesse du véhicule, l'assistance variable étant faite à l'intérieur de la valve d'assistance (4), dans laquelle l'alimentation en fluide hydraulique est assurée par une pompe électro-hydraulique (8), qui comprend une pompe hydraulique (9) proprement dite, raccordée à la valve d'assistance (4), et un moteur électrique (10) accouplé à la pompe (9), **caractérisée en ce que** le moteur électrique (10) possède une commande pilotée par un calculateur en fonction d'informations incluant l'angle instantané du volant, cette commande pilotée permettant la mise au ralenti ou à l'arrêt de la pompe (9)dans les cas où l'assistance n'est pas sollicitée, ou ne l'est que faiblement.

2. Système de direction assistée hydraulique de véhicule automobile, selon la revendication 1, **caractérisée en ce que** le pilotage du moteur électrique (10) de la pompe électro-hydraulique (8) et le pilotage du système de variation d'assistance sur la direction sont combinés au sein d'un même calculateur.

## Claims

1. A hydraulic power-assisted steering system of an automobile vehicle, with power-assistance which can be varied as a function of the speed of the vehicle, variable power-assistance being effected in the interior of the power-assistance valve (4) into which the supply of hydraulic fluid is ensured by an electro-hydraulic pump (8) which comprises an actual hydraulic pump (9) connected to the power-assistance valve (4) and an electric motor (10) which is coupled to the pump (9), **characterised in that** the electric motor (10) comprises an operating system controlled by a computer as a function of items of information including the instantaneous angle of the steering wheel, said controlled operating system enabling the pump (9) to be slowed down or stopped in the event that assistance is not required or is only required to a slight extent.

2. A hydraulic power-assisted steering system of an automobile vehicle according to claim 1, **characterised in that** control of the electric motor (10) for the electro-hydraulic pump (8) and control of the system for varying the power-assistance of the steering are combined within the same computer.

## Patentansprüche

1. Hydraulisches Servolenksystem für Kraftfahrzeuge, mit einer in Abhängigkeit von der Fahrzeuggeschwindigkeit variablen Servowirkung, wobei die variable Servowirkung im Inneren eines Hilfsventils (4) stattfindet, in dem die Versorgung mit Hydraulikflüssigkeit durch eine elektrohydraulische Pumpe (8) sichergestellt ist, die eine (eigentliche) Hydraulikpumpe (9), die mit dem Hilfsventil (4) verbunden ist, und einen mit der Pumpe (9) gekoppelten Elektromotor (19) umfasst,
**dadurch gekennzeichnet, dass**
der Elektromotor (10) einen Antrieb umfasst, der von einem Rechner in Abhängigkeit von Daten gesteuert wird, die den aktuellen Lenkradwinkel umfassen, wobei dieser gesteuerte Antrieb es ermöglicht, die Pumpe (9) in den Fällen, bei denen die Hilfswirkung nicht oder nur wenig beansprucht wird, in eine langsamere Geschwindigkeit oder in Stillstand zu versetzen.

2. Hydraulisches Servolenksystem nach Anspruch 1 für Kraftfahrzeuge,
**dadurch gekennzeichnet, dass**
die Steuerung des Elektromotors (10) der elektrohydraulischen Pumpe (8) und die Steuerung des Systems zur Veränderung der Servounterstützung an der Lenkung in ein und demselben Rechner zusammengefasst sind.
